# EUROPÄISCHE PATENTSCHRIFT

(11) **EP 1 735 903 B1**
(45) Veröffentlichungstag und Bekanntmachung des Hinweises auf die Patenterteilung: **12.05.2010**
(21) Anmeldenummer: 05715049.2
(22) Anmeldetag: 03.03.2005
(51) Int. Cl.: H02M 1/08, H02M 1/084, H02M 7/48, H02M 7/5387

(54) **SCHALTUNGSANORDNUNG FÜR FLUGTRIEBWERKSREGLER**
CIRCUIT ARRANGEMENT FOR AIRCRAFT ENGINE REGULATORS
CIRCUIT DESTINE AU REGULATEUR D'UN GROUPE MOTOPROPULSEUR

(30) Priorität: 26.03.2004 DE 102004014767
(43) Veröffentlichungstag der Anmeldung: 27.12.2006
(73) Patentinhaber: MTU Aero Engines GmbH, 80995 München (DE)
(72) Erfinder: GRIMM, Lutz, 85276 Hettenshausen (DE)
(86) Internationale Anmeldenummer: PCT/DE2005/000358
(87) Internationale Veröffentlichungsnummer: WO 2005/096487

(56) Entgegenhaltungen:
- US-A1- 2003 063 482
- US-A1- 2003 090 228
- US-B1- 6 404 655

## Beschreibung

Die Erfindung betrifft eine Schaltungsanordnung für Flugtriebwerksregler.

Als Flugtriebwerksregler kommen zunehmend digitale Regler zum Einsatz, die in der Lage sind, komplexe Regelalgorithmen innerhalb kürzester Zeit abzuarbeiten. Die digitalen Regler verdrängen zunehmend in analoger Technik ausgeführte Regler, wie z.B. im Dokument US2003/0090228 beschrieben. Digitale Flugtriebwerksregler dienen insbesondere der Ansteuerung von mit Gleichstrom zu betreibenden Aktuatoren, wobei es sich bei einem solchen Aktuator z. B. um einen Torque-Motor handeln kann. Mit einem solchen Torque-Motor bzw. einem gleichstrombetriebenen Aktuator kann z. B. die Treibstoffzufuhr am Flugtriebwerk beeinflusst werden. Weitere Anwendungsbereiche, in welchen Torque-Motoren bzw. gleichstrombetriebene Aktuatoren zum Einsatz kommen, sind z. B. die Verstellung der Leitschaufeln an einem Flugtriebwerk bzw. die Düsenverstellung an Flugtriebwerken. Digitale Flugtriebwerksregler stellen in der Regel ein digitales Ausgangssignal bereit, wobei es zur Ansteuerung eines gleichstrombetriebenen Aktuators mit einem derartigen digitalen Ausgangssignal erforderlich ist, das digitale Ausgangssignal des digitalen Flugtriebwerkreglers in ein Gleichstromsignal zu wandeln.

Nach dem Stand der Technik erfolgt die Wandlung von digitalen Ausgangssignalen in ein Gleichstromsignal unter Verwendung teurer Digital/AnalogWandler oder unter Verwendung teurer Ein-Bit-Wandler und der Verwendung analoger Verstärkerstufen. Die aus dem Stand der Technik bekannten Schaltungen sind demnach allesamt aufwendig und teuer.

Hiervon ausgehend liegt der vorliegenden Erfindung das Problem zu Grunde, eine neuartige Schaltungsanordnung für Flugtriebwerksregler zu schaffen.

Dieses Problem wird durch eine Schaltungsanordnung gemäß Patentanspruch 1 gelöst. Erfindungsgemäß dient die Schaltungsanordnung für Flugtriebwerksregler der Bereitstellung bzw. Erzeugung eines bipolaren Ausgangsgleichstromsignals als Funktion mindestens eines pulsweitenmodulierten Eingangssignals. Die Schaltungsanordnung umfasst mindestens zwei Treiberstufen, wobei jede Treiberstufe von einem pulsweitenmodulierten Eingangssignal ansteuerbar ist, und wobei die oder jede Treiberstufe mit vorzugsweise einer Tiefsetzstellerstufe derart verschaltet ist, dass bei Ansteuerung einer ersten Treiberstufe mit einem pulsweitenmodulierten Eingangssignal eine erste Schalteinrichtung einer Tiefsetzstellerstufe eine Tiefpasseinrichtung der Tiefsetzstellerstufe ansteuert, und dass bei Ansteuerung einer zweiten Treiberstufe mit einem pulsweitenmodulierten Eingangssignal eine zweite Schalteinrichtung der Tiefsetzstellerstufe die Tiefpasseinrichtung der Tiefsetzstellerstufe ansteuert.

Mit Hilfe der hier vorliegenden Erfindung wird eine Schaltungsanordnung für Flugtriebwerksregler zur Bereitstellung eines Ausgangsgleichstromsignals als Funktion mindestens eines pulsweitenmodulierten, digitalen Eingangssignals vorgeschlagen, welche ohne teure Digital/Analog-Wandler oder teure Ein-Bit-Wandler auskommt. Die erfindungsgemäße Schaltung erlaubt die Verwendung kleiner, preiswerter Ausgangshalbleiter. Die erfindungsgemäße Schaltung zeichnet sich durch eine geringe Baugröße, ein geringes Gewicht sowie eine hohe Zuverlässigkeit aus. Mit der hier vorliegenden Erfindung ist eine einfache Erzeugung einer variablen, steuerbaren sowie bipolaren Gleichstromquelle möglich.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Blockschaltbild eines Flugtriebwerksreglers mit der erfindungsgemäßen Schaltungsanordnung; und
- Fig. 2: ein detailiertes Blockschaltbild der erfindungsgemäßen Schaltungsanordnung.

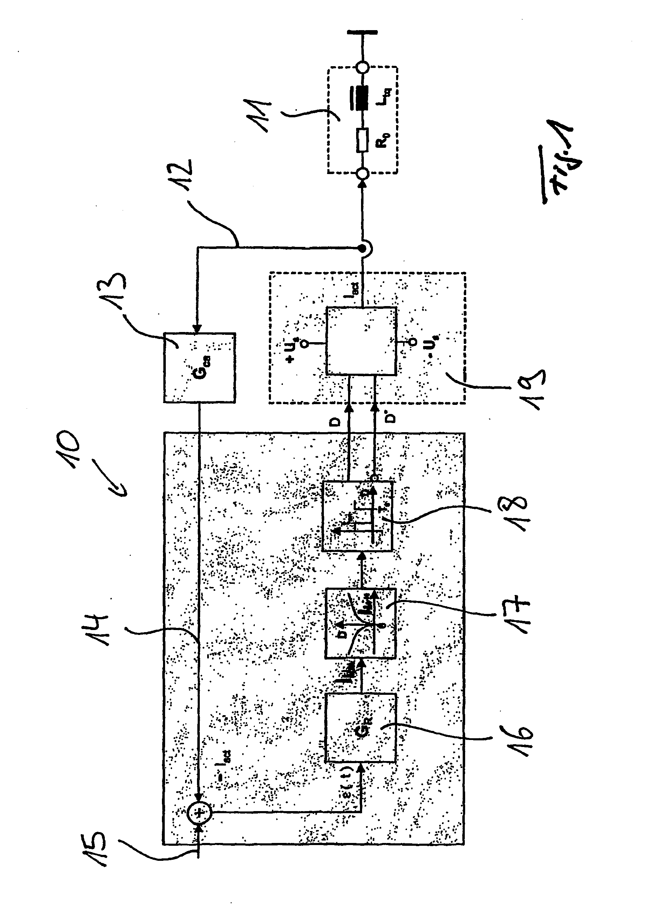

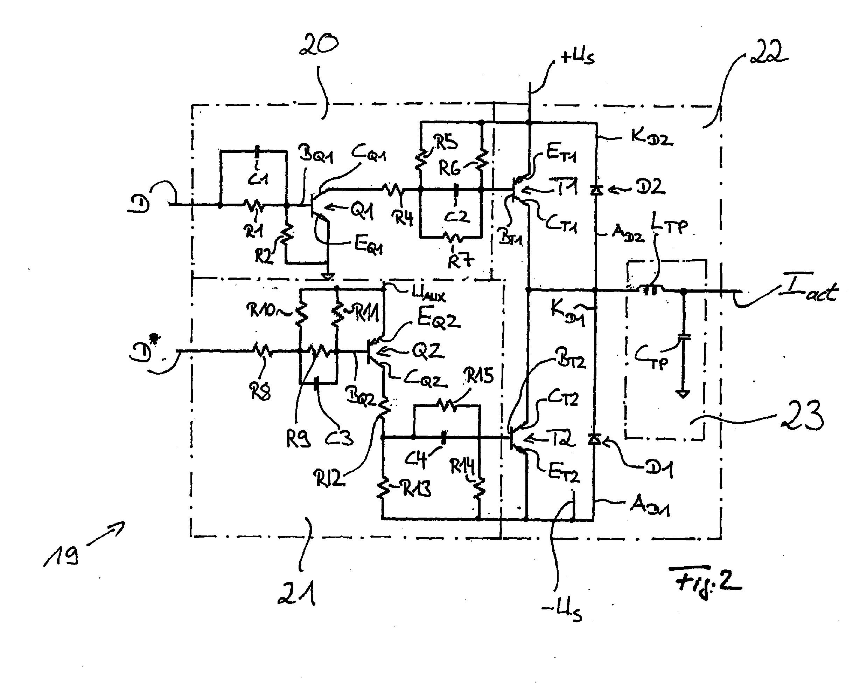

Nachfolgend wird die hier vorliegende Erfindung unter Bezugnahme auf Fig. 1 und 2 in größerem Detail beschrieben.

Fig. 1 zeigt ein Blockschaltbild eines Flugtriebwerkreglers 10 zur Ansteuerung eines mit Gleichstrom zu betreibenden Aktuators 11. Bei dem gleichstrombetriebenen Aktuator 11 handelt es sich insbesondere einen sogenannten Torque-Motor. Wie Fig. 1 entnommen werden kann, stellt der zu betreibende bzw. anzusteuernde Aktuator 11 eine ohmsche Last und eine induktive Last dar, wobei der ohmsche Widerstand des Aktuators 11 in Fig. 1 mit R₀ und die Induktivität desselben mit L_{tq} dargestellt ist.

Die Aufgabe des Flugtriebwerkreglers besteht darin, den Aktuator 11 mit einem definierten Gleichstromsignal I_{act} anzusteuern. Hierzu wird der tatsächliche Steuerstrom gemessen und ein entsprechendes Messsignal 12 wird einem Block 13 zugeführt, wobei der Block 13 eine Differenzverstärkerstufe mit nachgeschaltetem Analog/Digital-Wandler darstellt. Das Ausgangssignal 14 des Blocks 13 stellt demnach ein digitalisiertes Messsignal dar, welches im Flugtriebwerksregler 10 mit einem digitalen Sollsignal 15 verglichen wird. Die Regeldifferenz ε(t) zwischen dem digitalisierten Messsignal 14 und dem entsprechenden Sollsignal 15 wird einem digitalen Stromregler 16 zugeführt. Der digitale Stromregler 16 ist vorzugsweise als PID-Regler ausgebildet und stellt ein Ausgangssignal Iₗᵢₙ bereit, wobei das Ausgangssignal Iₗᵢₙ in den Blöcken 17 und 18 linearisiert und in pulsweitenmodulierte Ausgangssignale D und D^{*} des Flugtriebwerkreglers 10 gewandelt wird.

Die hier vorliegende Erfindung betrifft nun eine Schaltung 19 um aus den vom digitalen Flugtriebwerkregler 10 bereitgestellten, digitalen pulsweitenmodulierten Ausgangssignalen D und D^{*} ein entsprechendes Gleichstromsteuersignal I_{act} zur Ansteuerung des Aktuators 11 bereitzustellen. Wie Fig. 1 entnommen werden kann, werden die pulsweitenmodulierten Ausgangssignale D, D^{*} des Flugtriebwerkreglers 10 der erfindungsgemäßen Schaltung 19 als Eingangssignale zugeführt. Als Ausgangssignal gibt die erfindungsgemäße Schaltung 19 ein Gleichstromsignal I_{act} aus.

Die erfindungsgemäße Steuerschaltung 19 ist in Fig. 2 in größerem Detail gezeigt. Im bevorzugten Ausführungsbeispiel der Fig. 2 umfasst die erfindungsgemäße Schaltung 19 zwei Treiberstufen 20 und 21. Beide Treiberstufen 20 und 21 sind mit einer Tiefsetzstellerstufe 22 verschaltet. Wie der Fig. 2 entnommen werden kann, ist jede der beiden Treiberstufen 20 und 21 mit einem pulsweitenmodulierten Eingangssignal D bzw. D^{*} ansteuerbar, die Tiefsetzstellerstufe 22 gibt das gewünschte Gleichstromsignal I_{act} aus.

Gemäß Fig. 2 umfasst die erste Treiberstufe 20 einen Transistor Q1, wobei an einer Basis B_{Q1} des Transistors Q1 ein pulsweitenmoduliertes Eingangssignal D unter Zwischenschaltung eines Widerstands R1 anlegbar ist. Parallel zum Widerstand R1 ist ein Kondensator C1 geschaltet. Zwischen die Basis B_{Q1} und den Emitter E_{Q1} des Transistors Q1 der ersten Treiberstufe 20 ist ein weiterer Widerstand R2 geschaltet. Am Kollektor C_{Q1} des Transistors Q1 der ersten Treiberstufe 20 greifen gemäß Figur 2 weitere Widerstände R4, R5, R6 und R7 an, die im Sinne von Fig. 2 mit einem Kondensator C2 verschaltet sind. Der Transistors Q1 der ersten Treiberstufe 20 ist als sogenannter NPN-Transistor ausgebildet.

Die zweite Treiberstufe 21 umfasst ebenfalls einen Transistor Q2. An die Basis B_{Q2} des Transistors Q2 der zweiten Treiberstufe 20 ist unter Zwischenschaltung der Widerstände R8 und R9 das pulsweitenmodulierte Signal D* anlegbar. Parallel zum Widerstand R9 ist ein Kondensator C3 geschaltet. Weiterhin sind parallel zum Widerstand R9 weitere Widerstände R10 und R11 geschaltet, wobei die Widerstände und R10 und R11 ebenfalls an dem Emitter E_{Q2} des Transistors Q2 der zweiten Treiberstufe 21 angreifen. Am Kollektor C_{Q2} des Transistors Q2 der zweiten Treiberstufe 21 greifen im Sinne von Fig. 2 weitere Widerstände R12, R13, R14, R15 sowie ein weiterer Kondensator C4 an. Die genaue Verschaltung dieser Baugruppen kann Fig. 2 entnommen werden. Der Transistors Q2 der zweiten Treiberstufe 21 ist als sogenannter PNP-Transistor ausgebildet. Wie Fig. 2 entnommen werden kann, liegt an dem Emitter E_{Q2} des Transistors Q2 eine Versorgungsspannung U_{AUX} für die zweite Treiberstufe 21 an, die vorzugsweise der Versorgungsspannung der Mikroprozessors des digitalen Flugtriebwerkreglers 10 entspricht.

An dieser Stelle sei darauf hingewiesen, dass in dem Fall, in dem ein positives Gleichstromausgangssignal I_{act} bereitzustellen ist, die erste Treiberstufe 20 mit dem pulsweitenmodulierten Eingangssignal D beaufschlagt wird, die zweite Treiberstufe 21 hingegen mit einem konstanten bzw. permanenten High-Pegelsignal beaufschlagt ist. Soll ein negativer Ausgangsstrom I_{act} bereitgestellt werden, so wird die zweite Treiberstufe 21 mit dem pulsweitenmodulierten Eingangssignal D^{*} beaufschlagt, die erste Treiberstufe 20 hingegen ist mit einem konstanten bzw. permanenten Low-Pegelsignal beaufschlagt. Soll ein Nullstrom als Ausgangssignal der Schaltung 19 bereitgestellt werden, so ist die erste Treiberstufe 20 dauerhaft bzw. permanent mit dem Low-Pegelsignal und die zweite Treiberstufe 21 dauerhaft bzw. permanent mit dem High-Pegelsignal beaufschlagt.

Wie Fig. 2 entnommen werden kann, umfasst die Tiefsetzstellerstufe 22 einen Tiefpassfilter 23, der eine Induktivität L_{TP} und einen Kondensator C_{TP} umfasst. Die Induktivität L_{TP} des Tiefpassfilters 23 arbeitet im sogenannten lückenden Betrieb. Die Tiefsetzstellerstufe 22 umfasst neben dem Tiefpassfilter 23 zwei Schalteinrichtungen.

Eine erste Schalteinrichtung wird von einem Transistor T1 und einer Diode D1 bereitgestellt, wobei die erste Schalteinrichtung aus Transistor T1 und Diode D1 mit der ersten Treiberstufe 20 zusammenwirkt. Eine zweite Schalteinrichtung der Tiefsetzstellerstufe 22 wird von einem Transistor T2 und einer Diode D2 gebildet, wobei der Transistor T2 und die Diode D2 dieser zweiten Schalteinrichtung mit der zweiten Treiberstufe 21 zusammenwirken. Wird zur Bereitstellung eines positiven Ausgangsstromsignals die erste Treiberstufe 20 mit dem pulsweitenmodulierten Signal D und die zweite Treiberstufe 21 mit einem dauerhaften High-Pegelsignal beaufschlagt, so steuert die erste Schalteinrichtung aus Transistor T1 und Diode D1 den Tiefpassfilter 23 der Tiefsetzstellerstufe 22 an. Wird hingegen zur Bereitstellung eines negativen Gleichstromausgangsignals die zweite Treiberstufe 21 mit dem pulsweitenmodulierten Signal D^{*} und die erste Treiberstufe 20 mit einem permanenten Low-Pegelsignal beaufschlagt, so steuert die zweite Schalteinrichtung bestehend aus dem Transistor T2 und der Diode D2 den Tiefpass 23 der Tiefsetzstellerstufe 22 an.

Wie Fig. 2 entnommen werden kann, ist der Transistor T1 der ersten Schalteinrichtung als sogenannter PNP-Transistor ausgebildet, wobei am Emitter E_{T1} des PNP-Transistors T1 einerseits die Widerstände R5 und R6 der ersten Treiberstufe 20 und andererseits ein positiver Versorgungsspannungsanschluss +U_{S} für die Schaltung 19 angreift. Der Transistor T2 der zweiten Schalteinrichtung der Tiefsetzstellerstufe 22 ist hingegen als NPN-Transistor ausgebildet, wobei am Emitter E_{T2} des NPN-Transistors T2 einerseits die Widerstände R13 und R14 der zweiten Treiberstufe 21 und andererseits der negative Versorgungs Spannungsanschluss -U_{S} angreifen. Der Kollektor C_{T1} des PNP-Transistors T1 der ersten Schalteinrichtung sowie der Kollektor C_{T2} des NPN-Transistors T2 der zweiten Schalteinrichtung sind miteinander gekoppelt. An die Kollektoren C_{T1} und C_{T2} dieser beiden Transistoren T1 und T2 greift weiterhin die Induktivität L_{TP} des Tiefpassfilters 23 an.

Mit dem PNP-Transistor T1 der ersten Schalteinrichtung des Tiefsetzstellers 22 wirkt die Diode D1 zusammen. Die Diode D1 ist dabei derart mit dem NPN-Transistor T2 verschaltet, dass die Anode A_{D1} der Diode D1 am Emitter E_{T2} des Transistors T2 angreift und die Kathode K_{D1} der Diode D1 am Kollektor T_{T2} des Transistors T2 angreift. Mit dem NPN-Transistor T2 der zweiten Schalteinrichtung wirkt die Diode D2 zusammen, die gemäß Figur 2 derart mit dem Transistor T1 der zweiten Schalteinrichtung verschaltet ist, dass die Kathode K_{D2} der Diode D2 an dem Emitter E_{T1} des PNP-Transistors T1 und die Anode A_{D2} der Diode D2 an den Kollektor C_{T1} des Transistors T1 gekoppelt ist. Da die beiden Dioden D1 und D2 derart miteinander verschaltet sind, dass die Kathode K_{D1} der Diode D1 mit der Anode A_{D2} der Diode D2 gekoppelt ist, ist die Kathode K_{D1} der Diode D1 weiterhin mit dem Kollektor C_{T1} des PNP-Transistors T1 gekoppelt, die Anode A_{D2} der Diode D2 ist mit dem Kollektor C_{T2} des NPN-Transistors T2 verschaltet.

Die erfindungsgemäße Schaltungsanordnung 19 umfasst demnach zwei Treiberstufen 20 und 21, die mit einer Tiefsetzstellerstufe 22 zusammenwirken. Die Tiefsetzstellerstufe 22 umfasst für jede der Treiberstufen 20 und 21 eine Schalteinrichtung, wobei jede der beiden Schalteinrichtungen vorzugsweise von einem Transistor T1 bzw. T2 sowie einer mit dem Transistor T1 bzw. T2 zusammenwirkenden Diode D1 bzw. D2 gebildet wird. Abhängig von der Ansteuerung der Treiberstufen 20 und 21 mit pulsweitenmodulierten Signalen D bzw. D^{*} wird ein Tiefpassfilter 23 der Tiefsetzstellerstufe 22 entweder über die mit der ersten Treiberstufe 20 zusammenwirkende erste Schalteinrichtung aus Transistor T1 und Diode D1 oder über die mit der zweiten Treiberstufe 21 zusammenwirkende zweite Schalteinrichtung aus Transistor T2 und Diode D2 der Tiefsetzstellerstufe 22 beaufschlagt.

Sind z. B. zur Bereitstellung eines positiven Gleichstromausgangsignals I_{act} die erste Treiberstufe 20 mit dem pulsweitenmodulierten Signal D und die zweite Treiberstufe 21 mit einem permanenten High-Pegelsignal beaufschlagt, so wird der Tiefpassfilter 23 der Tiefsetzstellerstufe 22 von der mit der ersten Treiberstufe 20 zusammenwirkenden, vom Transistor T1 und der Diode D1 gebildeten Schalteinrichtung beaufschlagt. Die zweite Schalteinrichtung umfassend den Transistor T2 und die Diode D2 spielen in diesem Fall dann eine untergeordnete Rolle. Ist in diesem Fall das pulsweitenmodulierte Signal D auf einem High-Pegel, so ist der Transistor T1 der ersten Schalteinrichtung der Tiefsetzstellerstufe 22 leitend und es fließt ein entsprechender Strom in Richtung auf den Tiefpassfilter 23. Liegt hingegen das pulsweitenmodulierte Signal D auf einem Low-Pegel, so ist der Transistor T1 der ersten Schalteiririchtung geschlossen und der Drosselstrom I_{TP} im Teifpassfilter 23 kommutiert vom Transistor T1 der Tiefsetzstellerstufe 22 auf die Diode D1 der Tiefsetzstellerstufe 22. Eine entsprechende Funktionsweise der erfindungsgemäßen Schaltung 19 ergibt sich dann, wenn zur Bereitstellung eines negativen Gleichstromausgangsignals die erste Treiberstufe 20 mit einem permanenten Low-Pegelsignal und die zweite Treiberstufe 21 mit dem pulsweitenmodulierten Signal D^{*} beaufschlagt ist.

## Patentansprüche

1. Schaltungsanordnung für Flugtriebwerksregler, zur Bereitstellung bzw. Erzeugung eines bipolaren Ausgangsgleichstromsignals (I_{ect}) als Funktion mindestens eines pulsweitenmodulierten Eingangssignals (D, D^{*}), mit mindestens zwei Treiberstufen (20, 21), wobei jede Treiberstufe (20, 21) von einem pulsweitenmodulierten Eingangssignal (D, D^{*}) ansteuerbar ist, und wobei die oder jede Treiberstufe (20, 21) mit vorzugsweise einer Tiefsetzstellerstufe (22) derart verschaltet ist, dass bei Ansteuerung einer ersten Treiberstufe (21) eine erste Schalteinrichtung (T1, D1) einer Tiefsetzstellerstufe (22) eine Tiefpasseinrichtung (23) der Tiefsetzstellerstufe (22) ansteuert, und dass bei Ansteuerung einer zweiten Treiberstufe (21) eine zweite Schalteinrichtung (T2, D2) der Tiefsetzstellerstufe (22) die Tiefpasseinrichtung (23) der Tiefsetzstellerstufe (22) ansteuert.

2. Schaltungsanordnung nach Anspruch 1,
**dadurch** durch
zwei Treiberstufen (20 21), wobei jede der beiden Treiberstufe (20, 21) von einem pulsweitenmodulierten Eingangssignal (D, D^{*}) ansteuerbar ist, und wobei jede der beiden Treiberstufe (20, 21) mit einer Tiefsetzstellerstufe (22) derart verschaltet ist, dass bei Ansteuerung einer ersten Treiberstufe (20) die erste Schalteinrichtung (T1, D1) der Tiefsetzstellerstufe (22) die Tiefpasseinrichtung (23) der Tiefsetzstellerstufe (22) ansteuert, und dass bei Ansteuerung der zweiten Treiberstufe (21) eine zweite Schalteinrichtung (T2, D2) der Tiefsetzstellerstufe (22) die Tiefpasseinrichtung (23) der Tiefsetzstellerstufe (22) ansteuert.

3. Schaltungsanordnung nach Anspruch 1 oder 2,
**dadurch gekennzeichnet,**
**dass** jede Schalteinrichtung der Tiefsetzstellerstufe (22) zumindest einen Transistor (T1, T2) aufweist.

4. Schaltungsanordnung nach Anspruch 3,
**dadurch gekennzeichnet,**
**dass** mit dem Transistor (T1, T2) jeder Schalteinrichtung der Tiefsetzstellerstufe (22) eine Diode (D1, D2) zusammenwirkt.

5. Schaltungsanordnung nach einem oder mehreren der Ansprüche 2 bis 4,
**dadurch gekennzeichnet,**
**dass** die Tiefpasseinrichtung (23) der Tiefsetzstellerstufe (22) eine im lückenden Betrieb arbeitende Induktivität (L_{TP}) ausweist.

6. Schaltungsanordnung nach einem oder mehreren der Ansprüche 2 bis 5,
**dadurch gekennzeichnet,**
**dass** dann, wenn von der Schaltungsanordnung ein positives Ausgangsgleichstromsignal (I_{act}) bereitzustellen ist, die erste Treiberstufe (20) von einem pulsweitenmodulierten Eingangssignal (D) angesteuert ist, wohingegen die zweite Treiberstufe (21) mit einem dauerhaften High-Pegelsignal beaufschlagt ist, und dass dann die erste Schalteinrichtung (T1, D1) der Tiefsetzstellerstufe (22) die Tiefpasseinrichtung (23) der Tiefsetzstellerstufe (22) ansteuert.

7. Schaltungsanordnung nach einem oder mehreren der Ansprüche 2 bis 6,
**dadurch gekennzeichnet,**
**dass** dann, wenn von der Schaltungsanordnung ein negatives Ausgangsgleichstromsignal (I_{act}) bereitzustellen ist, die zweite Treiberstufe (21) von einem pulsweitenmodulierten Eingangssignal (D^{*}) angesteuert ist, wohingegen die erste Treiberstufe (20) mit einem dauerhaften Low-Pegelsignal beaufschlagt ist, und dass dann die zweite Schalteinrichtung (T2, D2) der Tiefsetzstellerstufe (22) die Tiefpasseinrichtung (23) der Tiefsetzstellerstufe (22) ansteuert.

8. Schaltungsanordnung nach einem oder mehreren der Ansprüche 2 bis 7,
**dadurch gekennzeichnet,**
**dass** die erste Schalteinrichtung einen PNP-Transistor (T1) und die zweite Schalteinrichtung einen NPN-Transistor (T2) umfasst, wobei die Basis (B_{T1}) des PNP-Transistors (T1) der ersten Schalteinrichtung mit der ersten Treiberstufe (20) und die Basis (B_{T2}) des NPN-Transistors (T2) der zweiten Schalteinrichtung mit der zweiten Treiberstufe (21) gekoppelt ist, wobei der Kollektor (C_{T1}) des PNP-Transistors (T1) der ersten Schalteinrichtung mit dem Kollektor (C_{T2}) des NPN-Transistors (T2) der zweiten Schalteinrichtung gekoppelt ist, und wobei der Emitter (E_{T1}) des PNP-Transistors (T1) der ersten Schalteinrichtung an einem positiven Versorgungsspannungsanschluss (+U_{S}) und der Emitter (E_{T2}) des NPN-Transistors (T2) der zweiten Schalteinrichtung an einen negativen Versorgungsspannungsanschluss (-U_{S}) gekoppelt ist.

9. Schaltungsanordnung nach Anspruch 8,
**dadurch gekennzeichnet,**
**dass** eine mit dem PNP-Transistors (T1) der ersten Schalteinrichtung zusammenwirkende Diode (D1) derart mit dem NPN-Transistor (T2) der zweiten Schalteinrichtung verschaltet ist, dass die Kathode (K_{D1}) dieser Diode (D1) an den Kollektor (C_{T2}) des NPN-Transistors (T2) und die Anode (A_{D1}) dieser Diode (D1) an den Emitter (E_{T2}) des NPN-Transistors (T2) gekoppelt ist.

10. Schaltungsanordnung nach Anspruch 8 oder 9,
**dadurch gekennzeichnet,**
**dass** eine mit dem NPN-Transistors (T2) der zweiten Schalteinrichtung zusammenwirkende Diode (D2) derart mit dem PNP-Transistor (T1) der ersten Schalteinrichtung verschaltet ist, dass die Kathode (K_{D2}) dieser Diode (D2) an den Emitter (E_{T1}) des PNP-Transistors (T1) und die Anode (A_{D2}) dieser Diode (D2) an den Kollektor (E_{T1}) des PNP-Transistors (T1) gekoppelt ist.

11. Schaltungsanordnung nach Anspruch 8, 9 oder 10,
**dadurch gekennzeichnet,**
**dass** die Kathode (K_{D1}) der mit dem PNP-Transistor (T1) der ersten Schalteinrichtung zusammenwirkende Diode (D1) an den Kollektor (C_{T1}) des PNP-Transistors (T1) der ersten Schalteinrichtung gekoppelt ist, und dass die Anode (A_{D2}) der mit dem NPN-Transistor (T2) der zweiten Schalteinrichtung zusammenwirkende Diode (D2) an den Kollektor (C_{T2}) des NPN-Transistors (T2) der zweiten Schalteinrichtung gekoppelt ist.

12. Schaltungsanordnung nach Anspruch 8, 9 oder 10,
**dadurch gekennzeichnet,**
**dass** jede Treiberstufe (20, 21) einen Transistor (Q1 Q2) und mit dem Transistor verschaltete Widerstände (R1 bis R14) und Kondensatoren (C1 bis C4) aufweist.

## Claims

1. Circuit arrangement for aircraft engine regulators, for providing or generating a bipolar output direct-current signal (I_{act}) as a function of at least one pulse-width-modulated input signal (D, D*), with at least two driver stages (20, 21), it being possible to drive each driver stage (20, 21) by a pulse-width-modulated input signal (D, D*), and the or each driver stage (20, 21) being connected to preferably a step-down converter stage (22), in such a way that when a first driver stage (21) is driven, a first switching device (T1, D1) of a step-down converter stage (22) drives a low-pass device (23) of the step-down converter stage (22), and that when a second driver stage (21) is driven, a second switching device (T2, D2) of the step-down converter stage (22) drives the low-pass device (23) of the step-down converter stage (22).

2. Circuit arrangement according to Claim 1,
**characterized by**
two driver stages (20, 21), it being possible to drive each of the two driver stages (20, 21) by a pulse-width-modulated input signal (D, D*), and each of the two driver stages (20, 21) being connected to a step-down converter stage (22), in such a way that when a first driver stage (20) is driven, the first switching device (T1, D1) of the step-down converter stage (22) drives the low-pass device (23) of the step-down converter stage (22), and that when the second driver stage (21) is driven, a second switching device (T2, D2) of the step-down converter stage (22) drives the low-pass device (23) of the step-down converter stage (22).

3. Circuit arrangement according to Claim 1 or 2,
**characterized in that**
each switching device of the step-down converter stage (22) has at least one transistor (T1, T2).

4. Circuit arrangement according to Claim 3,
**characterized in that**
a diode (D1, D2) works with the transistor (T1, T2) of each switching device of the step-down converter stage (22).

5. Circuit arrangement according to one or more of Claims 2 to 4,
**characterized in that**
the low-pass device (23) of the step-down converter stage (22) has an inductor (L_{TP}) which operates intermittently.

6. Circuit arrangement according to one or more of Claims 2 to 5,
**characterized in that**
when a positive output direct-current signal (I_{act}) is to be provided by the circuit arrangement, the first driver stage (20) is driven by a pulse-width-modulated input signal (D), whereas a permanent high-level signal is applied to the second driver stage (21), and that then the first switching device (T1, D1) of the step-down converter stage (22) drives the low-pass device (23) of the step-down converter stage (22).

7. Circuit arrangement according to one or more of Claims 2 to 6,
**characterized in that**
when a negative output direct-current signal (I_{act}) is to be provided by the circuit arrangement, the second driver stage (21) is driven by a pulse-width-modulated input signal (D*), whereas a permanent low-level signal is applied to the first driver stage (20), and that then the second switching device (T2, D2) of the step-down converter stage (22) drives the low-pass device (23) of the step-down converter stage (22).

8. Circuit arrangement according to one or more of Claims 2 to 7,
**characterized in that**
the first switching device includes a PNP transistor (T1) and the second switching device includes an NPN transistor (T2), the base (B_{T1}) of the PNP transistor (T1) of the first switching device being connected to the first driver stage (20), the base (B_{T2}) of the NPN transistor (T2) of the second switching device being connected to the second driver stage (21), the collector (C_{T1}) of the PNP transistor (T1) of the first switching device being connected to the collector (C_{T2}) of the NPN transistor (T2) of the second switching device, the emitter (E_{T1}) of the PNP transistor (T1) of the first switching device being connected to a positive supply voltage terminal (+U_{S}), and the emitter (E_{T2}) of the NPN transistor (T2) of the second switching device being connected to a negative supply voltage terminal (-U_{S}).

9. Circuit arrangement according to Claim 8,
**characterized in that**
a diode (D1) which works with the PNP transistor (T1) of the first switching device is connected to the NPN transistor (T2) of the second switching device, in such a way that the cathode (K_{D1}) of this diode (D1) is connected to the collector (C_{T2}) of the NPN transistor (T2), and the anode (A_{D1}) of this diode (D1) is connected to the emitter (E_{T2}) of the NPN transistor (T2).

10. Circuit arrangement according to Claim 8 or 9,
**characterized in that**
a diode (D2) which works with the NPN transistor (T2) of the second switching device is connected to the PNP transistor (T1) of the first switching device, in such a way that the cathode (K_{D2}) of this diode (D2) is connected to the emitter (E_{T1}) of the PNP
transistor (T1), and the anode (A_{D2}) of this diode (D2) is connected to the collector (E_{T1}) of the PNP transistor (T1).

11. Circuit arrangement according to Claim 8, 9 or 10,
**characterized in that**
the cathode (K_{D1}) of the diode (D1) which works with the PNP transistor (T1) of the first switching device is connected to the collector (C_{T1}) of the PNP transistor (T1) of the first switching device, and that the anode (A_{D2}) of the diode (D2) which works with the NPN transistor (T2) of the second switching device is connected to the collector (C_{T2}) of the NPN transistor (T2) of the second switching device.

12. Circuit arrangement according to Claim 8, 9 or 10,
**characterized in that**
each driver stage (20, 21) has a transistor (Q1, Q2) and resistors (R1 to R4) and capacitors (C1 to C4) which are connected to the transistor.

## Revendications

1. Circuit pour régulateurs de groupes motopropulseurs, pour la mise à disposition et/ou la génération d'un signal de courant continu de sortie bipolaire (I_{act}) en tant que fonction d'au moins un signal d'entrée à modulation des impulsions en largeur (D, D'), avec au moins deux étages d'excitation (20, 21), chaque étage d'excitation (20, 21) pouvant être commandé à l'aide d'un signal d'entrée à modulation des impulsions en largeur (D, D'), et ces ou chaque étage d'excitation (20, 21) étant mis en circuit de préférence avec un étage régulateur d'abaissement (22) de manière à ce que, lors de la commande d'un premier étage d'excitation (21), un premier dispositif de commande (T1, D1) d'un étage régulateur d'abaissement (22) commande un dispositif passe-bas (23) de l'étage régulateur d'abaissement (22), et de manière à ce que, lors de la commande d'un deuxième étage d'excitation (21), un deuxième dispositif de commande (T2, D2) de l'étage régulateur d'abaissement (22) commande le dispositif passe-bas (23) de l'étage régulateur d'abaissement (22).

2. Circuit selon la revendication 1, **caractérisé par** deux étages d'excitation (20, 21), chacun des deux étages d'excitation (20, 21) pouvant être commandé par un signal d'entrée à modulation des impulsions en largeur (D, D'), et chacun des deux étages d'excitation (20, 21) étant mis en circuit avec un étage régulateur d'abaissement (22) de manière à ce que, en cas de commande d'un premier étage d'excitation (20), le premier dispositif de commande (T1, D1) de l'étage régulateur d'abaissement (22) commande le dispositif passe-bas (23) de l'étage régulateur d'abaissement (22), et de manière à ce que, lors de la commande du deuxième étage d'excitation (21), un deuxième dispositif de commande (T2, D2) de l'étage régulateur d'abaissement (22) commande le dispositif passe-bas (23) de l'étage régulateur d'abaissement (22).

3. Circuit selon la revendication 1 ou 2, **caractérisé en ce que** chaque dispositif de commande de l'étage régulateur d'abaissement (22) présente au moins un transistor (T1, T2).

4. Circuit selon la revendication 3, **caractérisé en ce qu'**une diode (D1, D2) coopère avec le transistor (T1, T2) de chaque dispositif de commande de l'étage régulateur d'abaissement (22).

5. Circuit selon l'une quelconque ou plusieurs des revendications 2 à 4, **caractérisé en ce que** le dispositif passe-bas (23) de l'étage régulateur d'abaissement (22) présente une inductance (L_{TP}) travaillant en fonctionnement discontinu.

6. Circuit selon l'une quelconque ou plusieurs des revendications 2 à 5, **caractérisé en ce que,** lorsque le circuit doit mettre à disposition un signal de courant continu de sortie positif (I_{act}), le premier étage d'excitation (20) est commandé par un signal d'entrée à modulation des impulsions en largeur (D) alors que le deuxième étage d'excitation (21) est quant à lui alimenté par un signal de niveau élevé continu, et en que le premier dispositif de commande (T1, D1) de l'étage régulateur d'abaissement (22) commande alors le dispositif passe-bas (23) de l'étage régulateur d'abaissement (22).

7. Circuit selon l'une quelconque ou plusieurs des revendications 2 à 6, **caractérisé en ce que,** lorsque le circuit doit mettre à disposition un signal de courant continu de sortie négatif (I_{act}), le deuxième étage d'excitation (21) est commandé par un signal d'entrée à modulation des impulsions en largeur (D') alors que le premier étage d'excitation (20) est quant à lui alimenté par un signal de niveau bas continu, et **en ce que** le deuxième dispositif de commande (T2, D2) de l'étage régulateur d'abaissement (22) commande alors le dispositif passe-bas (23) de l'étage régulateur d'abaissement (22).

8. Circuit selon l'une quelconque ou plusieurs des revendications 2 à 7, **caractérisé en que** le premier dispositif de commande comprend un transistor PNP (T1) et en ce que le deuxième dispositif de commande comprend un transistor NPN (T2), la base (B_{T1}) du transistor PNP (T1) du premier dispositif de commande étant couplée avec le premier étage d'excitation (20), et la base (B_{T2}) du transistor NPN (T2) du deuxième dispositif de commande étant couplée avec le deuxième étage d'excitation (21), moyennant quoi le collecteur (C_{T1}) du transistor PNP (T1) du premier dispositif de commande est couplé avec le collecteur (C_{T2}) du transistor NPN (T2) du deuxième dispositif de commande, et moyennant quoi l'émetteur (E_{T1}) du transistor PNP (T1) du premier dispositif de commande est couplé avec une borne de tension d'alimentation positive (+U_{S}) et l'émetteur (E_{T2}) du transistor NPN (T2) du deuxième dispositif de commande étant couplé avec une borne de tension d'alimentation négative (-U_{S}).

9. Circuit selon la revendication 8, **caractérisé en ce qu'**une diode (D1) coopérant avec le transistor PNP (T1) du premier dispositif de commande est mise en circuit avec le transistor NPN (T2) du deuxième dispositif de commande de manière à ce que la cathode (K_{D1}) de cette diode (D1) est couplée avec le collecteur (C_{T2}) du transistor NPN (T2) et que l'anode (A_{D1}) de cette diode (D1) est couplée avec l'émetteur (E_{T2}) du transistor NPN (T2).

10. Circuit selon la revendication 8 ou 9, **caractérisé en ce qu'**une diode (D2) coopérant avec le transistor NPN (T2) du deuxième dispositif de commande est mise en circuit avec le transistor PNP (T1) du premier dispositif de commande de manière à ce que la cathode (K_{D2}) de cette diode (D2) est couplée avec l'émetteur (E_{T1}) du transistor PNP (T1) et que l'anode (A_{D2}) de cette diode (D2) est couplée avec le collecteur (E_{T1}) du transistor PNP (T1).

11. Circuit selon l'une des revendications 8, 9 ou 10, **caractérisé en ce que** la cathode (K_{D1}) de la diode (D1) coopérant avec le transistor PNP (T1) du premier dispositif de commande est couplée avec le collecteur (C_{T1}) du transistor PNP (T1) du premier dispositif de commande, et **en ce que** l'anode (A_{D2}) de la diode (D2) coopérant avec le transistor NPN (T2) du deuxième dispositif de commande est couplée avec le collecteur (C_{T2}) du transistor NPN (T2) du deuxième dispositif de commande.

12. Circuit selon la revendication 8, 9 ou 10, **caractérisé en ce que** chaque étage d'excitation (20, 21) présente un transistor (Q1, Q2) et des résistances (R1 à R14) en circuit avec le transistor et des condensateurs (C1 à.C4).
